# DEMANDE DE BREVET EUROPEEN

(11) **EP 1 267 533 A1**
(43) Date de publication de la demande: **18.12.2002**
(21) Numéro de dépôt: 02291432.9
(22) Date de dépôt: 10.06.2002
(51) Int. Cl.: H04L 12/64

(54) **Equipement de raccordement simultané d'au moins un accès en mode ATM et un accès de téléphonie en mode circuit à un lien de transmission haut débit**

(30) Priorité: 11.06.2001 FR 0107595
(71) Demandeur: Aeta.com, 92140 Clamart (FR)
(72) Inventeur: Raulin, Jean-Marie, 92260 Fontenay aus Roses (FR); Claret de Fleurieu, Bertrand, 94160 Saint Mande (FR)
(74) Mandataire: Plaçais, Jean-Yves

(57) **Abrégé**

L'équipement de raccordement comprend une première branche d'accès (24) possédant une première entrée/sortie (30) d'un signal issu ou à destination d'au moins un accès de téléphonie en mode circuit (32), un convertisseur mode circuit/TDM et TDM/mode circuit (36) et une seconde entrée/sortie (38) d'un signal TDM, et une seconde branche d'accès (26) possédant au moins une première entrée/sortie (52) d'un signal en mode ATM, un convertisseur (60) ATM/TDM et TDM/ATM et une seconde entrée/sortie (62) d'un signal TDM. Un organe formant brasseur/multiplexeur (42) possède une première entrée/sortie (40) reliée à la seconde entrée/sortie (38) de la première branche (24), une seconde entrée/sortie (44) reliée à la seconde entrée/sortie (62) de la seconde branche (26), et une troisième entrée/sortie (46) destinée à être reliée à un lien de transmission haut débit (74). L'organe brasseur/multiplexeur (42) alloue selon une loi d'allocation choisie, statique ou dynamique, un premier nombre p d'intervalle de temps au signal de téléphonie de la première branche d'accès (24) et un second nombre q d'intervalle de temps au signal en mode ATM de la seconde branche d'accès (26).

## Description

La présente invention concerne le raccordement simultané d'au moins un accès de téléphonie en mode circuit et un accès en mode ATM à un lien de transmission haut débit, en particulier mais non limitativement au format G704.

La recommandation G704 de l'Union Internationale des Télécommunications (UIT), secteur télécommunication recommande pour les liens de transmission haut débit une trame numérique à 2 Mbit/s (2 mégabits par seconde), en mode TDM pour Time Division Multiplexing, c'est-à-dire multiplexage à division temporelle.

Un tel lien de transmission haut débit trouve une application particulière en technologie "Digital Subscriber Line", appelée communément DSL pour Ligne d'Abonné Numérique qui consiste à acheminer des informations à haut débit au domicile des abonnés et/ou aux entreprises à travers des lignes téléphoniques en cuivre ordinaire (paire torsadée).

Généralement, à l'autre extrémité de la boucle locale de communication DSL, les lignes d'abonnés numériques DSL sont raccordées à un multiplexeur d'accès pour lignes d'abonnés numériques, appelé encore équipement DSLAM pour Digital Subscriber Line Access Multiplexer.

En pratique, l'équipement DSLAM comprend un commutateur ATM (Asynchronous Transfer Mode pour mode de transfert asynchrone) pour la transmission de données à des vitesses jusqu'à plusieurs gigabits par seconde.

De plus, l'équipement DSLAM, notamment en technologie SDSL (c'est-à-dire en technologie DSL symétrique dans laquelle la répartition voie montante et voie descendante est identique) est équipé d'une passerelle vers le réseau téléphonique commuté RTC, de type V5.2 ou autre qui permet le cas échéant le raccordement au réseau téléphonique commuté RTC.

On connaît déjà des protocoles de communication tels que voix sur ATM ou voix sur IP (Internet Protocol) qui définissent la manière de faire passer (numériser) la voix en mode paquets, par exemple en technologie DSL.

Toutefois, de tels protocoles appliqués à la téléphonie ne sont pas totalement satisfaisants. En effet, ces protocoles ne garantissent pas une qualité de service téléphonique équivalente à celle offerte aujourd'hui par le réseau téléphonique commuté car la voix s'accommode mal du transport par paquets.

De plus, la téléphonie sur IP et/ou ATM présente des contraintes quant aux services (par exemple incorporation de moyens de détection d'une connexion de télécopieur ou de modem dans le cadre du protocole voix sur ATM, complexité du protocole voix sur IP, incompatibilité avec les commutateurs internes de type PABX) et des inconvénients notables comme celui de nécessiter l'incorporation d'annuleur d'écho pour éliminer l'effet retard.

De plus, en terme de coût, l'usage d'un équipement DSLAM n'est pas optimal pour des zones géographiques peu denses en terme d'abonnés potentiels (distance maximale de l'ordre de 4 à 5 km entre un abonné et un équipement DSLAM disposé à l'extrémité de la boucle locale).

La présente invention remédie à ces inconvénients.

Tout d'abord, elle vise à fournir un équipement de raccordement apte à raccorder simultanément au moins un accès de téléphonie en mode circuit et un accès en mode ATM à un lien haut débit qui n'utilise pas un équipement DSLAM à l'autre extrémité de la boucle locale.

Elle vise aussi à transporter simultanément de la voix téléphonique et des données en mode ATM sur un même lien de transmission ou conduit haut débit (support physique en cuivre, lien radiofréquence ou fibre optique).

Elle porte sur un équipement de raccordement apte à raccorder simultanément au moins un accès de téléphonie en mode circuit et un accès en mode ATM à un lien de transmission haut débit.

Selon une définition générale de l'invention, l'équipement de raccordement comprend :
- une première interface possédant une première entrée/sortie d'un signal issu ou à destination d'au moins un accès de téléphonie en mode circuit, un convertisseur mode circuit/TDM et TDM/mode circuit et une seconde entrée/sortie d'un signal TDM ;
- une seconde interface possédant au moins une première entrée/sortie d'un signal en mode ATM, un convertisseur ATM/TDM et TDM/ATM et une seconde entrée/sortie d'un signal TDM ; et
- un organe formant brasseur/multiplexeur possédant une première entrée/sortie reliée à la seconde entrée/sortie de la première interface, une seconde entrée/sortie reliée à la seconde entrée/sortie de la seconde interface, et une troisième entrée/sortie destinée à être reliée à un lien de transmission haut débit, ledit organe brasseur/multiplexeur étant apte à allouer selon une loi d'allocation choisie un premier nombre p d'intervalles temps au signal de téléphonie de la seconde entrée/sortie de la première interface et un second nombre q d'intervalles de temps au signal en mode ATM de la seconde entrée/sortie de la seconde interface.

Ainsi, l'équipement de raccordement selon l'invention transporte la voix téléphonique en mode circuit et les données en mode ATM sur un seul et même support physique de manière non plus encapsulée dans des cellules ATM mais dans des intervalles de temps d'un signal TDM, par exemple à 2 Mbit/s ou analogue.

De plus, un tel équipement de raccordement permet de raccorder à un lien de transmission haut débit au moins un accès en mode ATM et plusieurs accès de téléphonie en mode circuit de type PABX, RNIS, ou accès classique de type Z ou POTS, sans nécessiter de modification dans l'installation de l'entreprise et tout en gardant une qualité de service satisfaisante pour la voix, fax, modem, commutation interne de type PABX etc...

De plus, en l'absence d'équipement DSLAM dans la boucle locale, il n'est plus nécessaire de disposer d'un réseau ATM et d'une passerelle RTC à proximité de la boucle locale, mais au contraire d'utiliser, selon l'invention, un simple modem DSL et de déporter à distance les fonctions de commutation ATM et de passerelle RTC via des artères de communication à distance de type réseaux intercentraux par exemple.

D'autres caractéristiques et avantages de l'invention apparaîtront à la lumière de la description ci-après et des dessins dans lesquels :
- la figure 1 représente schématiquement le raccordement de plusieurs lignes d'abonnés numériques DSL à un équipement DSLAM de l'art antérieur ;
- la figure 2 représente schématiquement un équipement de raccordement simultané de plusieurs accès de téléphonie en mode circuit et d'accès en mode ATM à un lien de transmission haut débit selon l'invention ;
- la figure 3 est un bloc diagramme représentant schématiquement l'équipement de raccordement à un lien de transmission haut débit de type DSL selon l'invention ;
- la figure 4 est un bloc diagramme représentant schématiquement l'équipement de raccordement à quatre liens de transmission haut débit de type DSL selon l'invention ;
- la figure 5 représente schématiquement un bloc diagramme d'une carte d'accès de téléphonie en mode circuit de type interface Z deux fils selon l'invention; et
- la figure 6 représente schématiquement un bloc diagramme d'une carte d'accès de téléphonie en mode circuit pour trois accès de base RNIS selon l'invention.

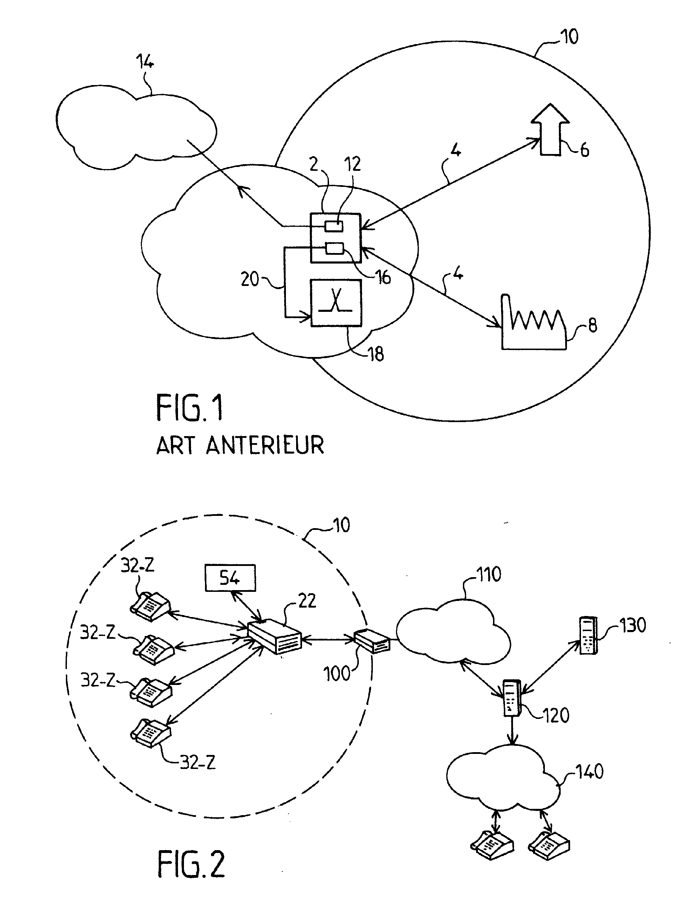

En référence à la figure 1, un équipement DSLAM 2 reçoit des lignes d'abonnés numériques DSL 4 acheminant des informations à haut débit au domicile des abonnés 6 et aux entreprises 8 à travers des lignes téléphoniques en cuivre ordinaire (paire torsadée).

En pratique, l'équipement DSLAM 2 est disposé à l'extrémité de la boucle locale de communication DSL 10 dont le rayon d'action est de l'ordre de quatre à cinq kilomètres pour des lignes téléphoniques en cuivre ordinaire.

En pratique, l'équipement DSLAM 2 comprend un commutateur ATM 12 pour la transmission de données à des vitesses jusqu'à plusieurs gigabits/seconde à un réseau ATM 14 pour des applications internet par exemple.

De plus, l'équipement DSLAM 2 comprend en outre une passerelle 16 vers le réseau téléphonique commuté 18. Cette passerelle 16 comprend une connexion 20 de type V5.2 qui permet le cas échéant le raccordement au réseau téléphonique RTC.

Une telle installation n'est pas totalement satisfaisante en termes de coûts et de qualité de service, pour les raisons mentionnées ci-avant.

Pour remédier à ces inconvénients, le demandeur propose un équipement de raccordement à au moins un lien de transmission haut débit, en particulier au format G704, permettant de raccorder simultanément des accès de téléphonie en mode circuit et des accès en mode ATM, tel qu'un accès de réseau local haut débit.

En référence aux figures 2, 3 et 4, l'équipement de raccordement 22 comprend deux branches d'accès 24 et 26, l'une 24 pour la téléphonie en mode circuit, l'autre 26 pour le mode ATM.

La branche d'accès 24 comprend une interface 28 possédant une première entrée/sortie 30 d'un signal à n X 64 kbit/s issu ou à destination d'au moins un accès de téléphonie en mode circuit 32 qui peut être un accès 32-G pour un commutateur interne de type PABX (format G703), plusieurs accès 32-Z pour des postes téléphoniques de type Z ou POTS (plain old telephone system) ou bien encore plusieurs accès 32-S de type RNIS.

L'interface 28 comprend une seconde entrée/sortie 32 reliée à une première entrée/sortie 34 d'un convertisseur de trame 36. Le convertisseur 36 a pour fonction de mettre en forme les signaux de téléphonie à n X 64 kbit/s émanant de l'interface 28 dans un train numérique à 2 Mbit/s. Le convertisseur 36 assure également la fonction inverse consistant à convertir un train à 2 Mbit/s en des signaux de téléphonie à n X 64 kbit/s.

La seconde entrée/sortie 38 du convertisseur 36 est reliée à une première entrée/sortie 40 d'un brasseur 42 que l'on décrira plus en détail ci-après.

De son côté, la branche d'accès 26 comprend une interface 50 possédant une première entrée/sortie 52 destinée à être reliée à un accès réseau local à haut débit, de type LAN ou analogue 54.

L'interface 50 est par exemple de type interface ETHERNET ou analogue.

L'interface 50 comprend une seconde entrée/sortie 56 reliée à une première entrée/sortie 58 d'un convertisseur 60 apte à mettre en cellules ATM les signaux en provenance de l'interface ETHERNET 50.

Le convertisseur 60 est en outre apte à mettre les cellules ATM au format G804 correspondant à la mise en forme des cellules ATM dans un train numérique TDM à 2 Mbit/s.

Le convertisseur 60 comprend une seconde entrée/sortie 62 reliée à une seconde entrée/sortie 40 de l'organe brasseur 42.

Pour les signaux émanant du brasseur 42, le convertisseur 60 assure bien évidemment les fonctions inverses de mise en cellules ATM et de mise en forme dans un train de 2 Mbit/s.

L'organe formant brasseur 42 reçoit en provenance des entrées/sorties 40 et 44 deux trains à 2 Mbit/s et délivre à l'entrée/sortie 46 un train à 2 Mbit/s.

L'entré/sortie 46 est reliée à une première entrée/sortie 64 d'un organe 66 formant trameur au format G704.

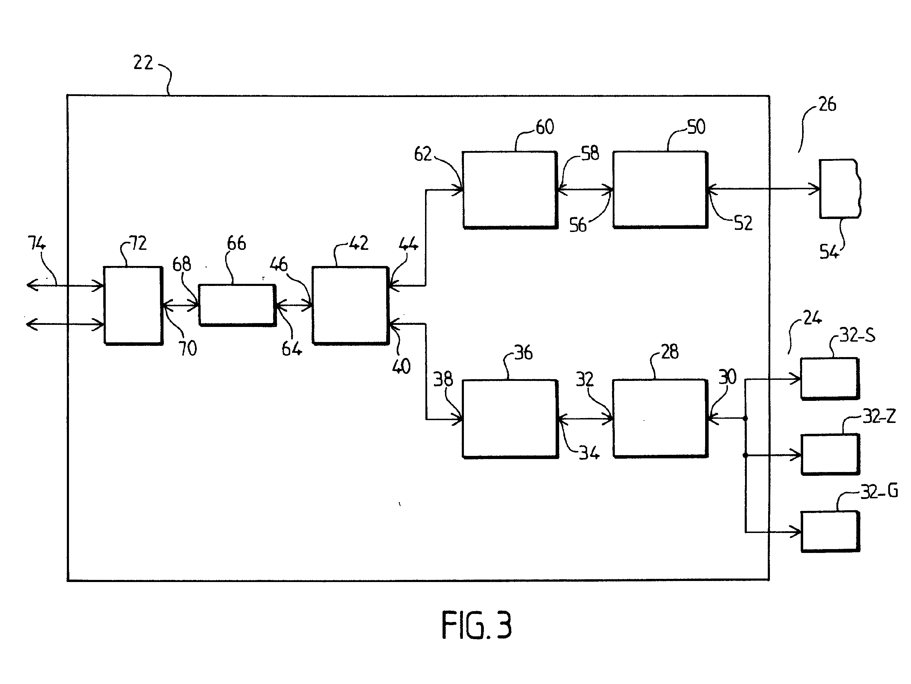

L'entrée/sortie 68 de l'organe trameur 66 est reliée à l'entrée/sortie 70 d'une interface 72 de ligne 74. Dans la figure 3, la ligne 74 est une ligne DSL sur paire torsadée. En variante, la ligne DSL 74 sur paire torsadée peut être remplacer par une fibre optique, une paire coaxiale, ou un lien radiofréquence (non représentés).

L'organe brasseur 42 joue le rôle d'un multiplexeur de trains à 2 Mbit/s.

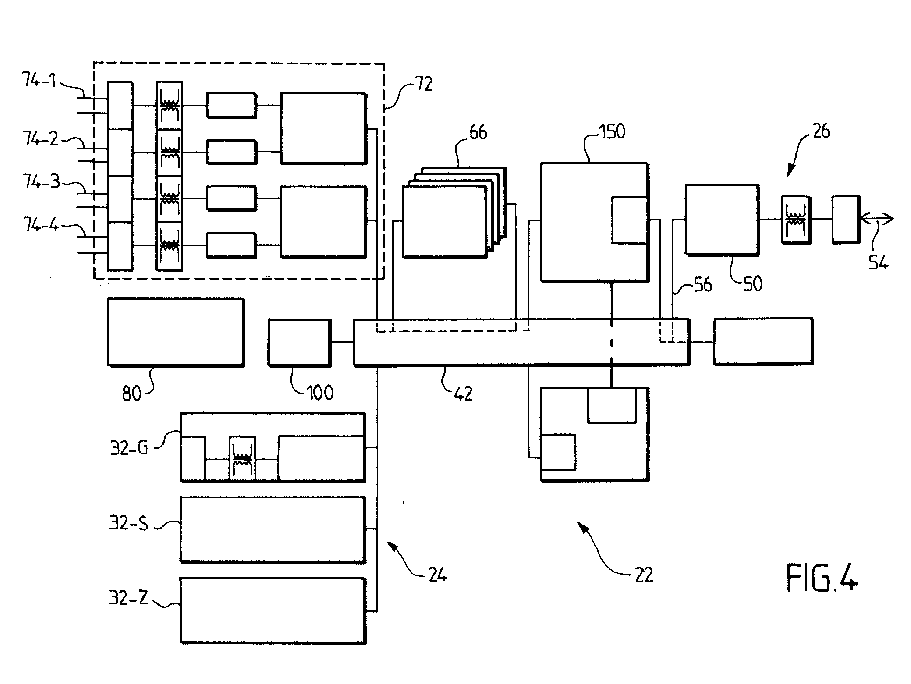

En référence à la figure 4, l'équipement de raccordement 22 est raccordé à 4 liens de transmission haut débit (lignes DSL individualisées en 74-1 à 74-4).

L'équipement de raccordement 22 selon l'invention est un équipement particulièrement adapté pour l'accès aux infrastructures de voix et de données. Il offre la possibilité de raccorder simultanément un accès Ethernet et soit un accès G703/G704 ou six accès POTS ou trois accès RNIS sur une ou plusieurs paires SDSL.

Outre le multiplexage des interfaces d'abonnés, l'équipement de raccordement permet d'offrir une fonction pont/routeur intégré. Par exemple, il est alimenté par un bloc d'alimentation 80 en 230 volts secteur.

Selon l'invention, l'organe brasseur/multiplexeur 42 est apte à allouer selon une loi d'allocation choisie un premier nombre d'intervalle de temps pIT aux signaux de téléphonie (voix) et un second nombre d'intervalle de temps qIT au signal en mode ATM.

La loi d'allocation des intervalles de temps entre l'accès de téléphonie en mode circuit et l'accès en mode ATM peut être statique ou dynamique.

En pratique, le lien haut débit, outre les intervalles pIT de téléphonie en mode circuit, et les intervalles qIT en mode ATM, comporte un intervalle IT de synchronisation de l'ensemble et un intervalle IT de transport de la signalisation téléphonique en mode circuit.

Par exemple, la capacité voix de l'équipement utilise jusqu'à six intervalles de temps à 64 kbit/s (p = 6). La voix téléphonique est transportée au format V5.1. Les données en mode ATM sont véhiculées sur les autres intervalles de temps restants (par exemple q = 24).

D'autres répartitions p/q peuvent être mises en place en fonction des besoins des usagers et/ou des configurations des opérateurs, par exemple p = q = 15, ou p = 2 et q = 22, ou bien encore p = 3 et q = 35.

En pratique, le lien haut débit n'est pas limité à 2 Mbits/s. En effet, l'invention s'applique aussi à des liens ayant des débits inférieurs par exemple quelques centaines de Kbit/s ou à des débits supérieurs.

En référence à la figure 2, l'équipement de raccordement 22 selon l'invention permet de transmettre des flux SDSL tramés, autorisant le raccordement, par l'intermédiaire d'un modem 100 de type SDSL, aux équipements de transmission existants 110 de type PDH (Plesiocronous Digital Hierarchy et/ou SDH (Synchronous Digital Hierarchy).

Ainsi, grâce à l'invention, il est possible de déporter par les équipements de transmission existants 110 des fonctions de commutation ATM et de passerelles RTC de l'équipement DSLAM de l'art antérieur. La fonction de transmission SDSL reste la seule à être mise en oeuvre à l'extrémité de la boucle locale 10. Une telle configuration permet d'optimiser le raccordement de lignes SDSL pour des zones locales peu denses où un équipement DSLAM ne se justifie pas sur le plan économique.

En pratique, les données en mode ATM sont acheminées directement sur un réseau 130 en mode ATM à travers le réseau 110 PDH/SDH existant et une passerelle de commutation 120 en mode ATM.

Les données de téléphonie (par exemple issues d'un commutateur PABX ou d'un accès RNIS) sont multiplexées dans le train à deux mégabits issu de l'équipement de raccordement selon l'invention jusqu'à la passerelle de commutation 120 où elles sont reliées au réseau téléphonique commuté RTC 140 dans un train au format approprié, par exemple V5.2.

Dans le cadre de données d'accès 32-Z de type POTS ou Z, les données peuvent être directement mises au format V5.1 et acheminées via la passerelle 120 au réseau RTC au format V5.2.

En pratique, l'interface 72 est conforme à la recommandation G991.2. Cette interface est chargée d'assurer le branchement au réseau haut débit, l'adaptation d'impédance, l'isolation galvanique et l'adaptation électrique entre les signaux de ou vers le réseau et les signaux de niveau logique.

Le débit en ligne est variable en fonction de la longueur et de la qualité de cette ligne. Ce débit peut être donc de l'ordre de 512 kilobits à 2 mégabits/seconde.

La séparation du flux de données sur les interfaces 72 permet d'augmenter la portée en diminuant le débit sur chaque interface 72. Ainsi le débit en ligne de 2 Mbit/s peut être atteint par deux paires supportant chacune 1 Mbit/s. La portée est ainsi grandement améliorée. Le raccordement peut bien évidemment fonctionner en une paire à 2 Mbit/s.

En référence à la figure 4, la transmission haut débit comprend 4 paires SDSL 74, ce qui autorise un débit résultant jusqu'à 8 Mbit/s.

Le raccordement des interfaces 72 peut être réalisé par des embases de type RJ11.

En pratique, on peut raccorder un accès de type LAN et au choix trois accès RNIS de type S0 ou bien six accès de type POTS ou bien encore un accès G703/G704.

L'architecture interne (figure 4) de l'équipement de raccordement 22 est organisée autour d'un microprocesseur 150 de type MPC PowerQuick de la famille 8xx qui assure la gestion de l'ensemble de l'équipement et le traitement de l'interface ETHERNET 50, fonction pont/routeur ainsi que la mise en cellule ATM.

La fonction de l'organe brasseur/multiplexeur 42 est par exemple assurée par un composant de type FPGA pour "Field Programmable Gate Array".

Une horloge 160 est prévue notamment pour participer à la mise en cellules en mode ATM.

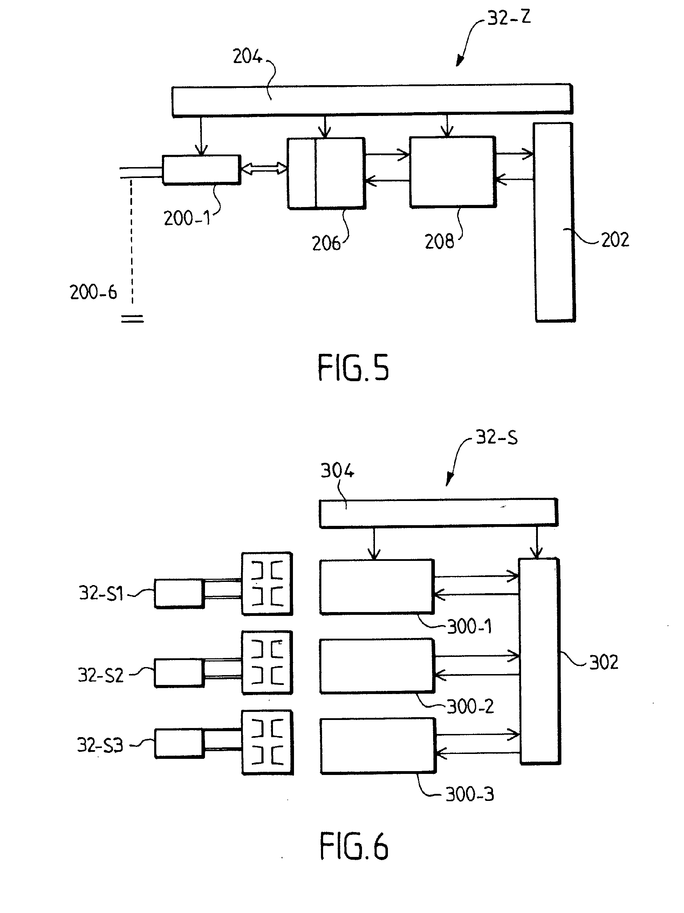

En référence à la figure 5, l'interface d'accès 32-Z comprend six interfaces 200-1 à 200-6 de type Z à deux fils et une interface 202 de type IOM-2 par exemple permettant d'acheminer les flux de téléphonie (voix) numérisés dans des canaux B, vers un brasseur interne.

Les accès 32-Z présentent un connecteur de type RJ11. Ces accès Z permettent d'assurer les fonctionnalités classiques de téléphonie telles que génération des tensions de sonnerie, détection de l'état de boucle, inversion de polarité au raccroché, filtrage 206, échantillonnage et codage 208, détection DTMF.

Un contrôleur 204 effectue un transcodage de signalisation en mode V5.1.

En référence à la figure 6, une interface pour accès 32-S de type RNIS comprend trois interfaces 300 individualisées en 300-1 à 300-3 et une interface 302 de type IOM-2 par exemple permettant d'acheminer les flux de phonie numérisés dans des canaux B, vers un brasseur interne. Un contrôleur 304 effectue un transcodage de signalisation en mode V5.1.

Les fonctions téléphoniques sont identiques pour les deux types d'interfaces Z ou SO. Ces cartes permettent d'assurer des fonctions téléphoniques classiques notamment d'assurer la conversation à trois, les communications internes sans passer par les réseaux téléphoniques commutés, la mise en attente d'une communication, le transfert d'appel, l'interception d'un appel par un des postes raccordés sur une autre interface, et analogue.

## Revendications

1. Equipement de raccordement pour raccorder simultanément au moins un accès de téléphonie en mode circuit et un accès en mode ATM à un lien de transmission haut débit, **caractérisé en ce qu'**il comprend :
- une première branche d'accès (24) possédant une première entrée/sortie (30) d'un signal issu ou à destination d'au moins un accès de téléphonie en mode circuit (32), un convertisseur mode circuit/TDM et TDM/mode circuit (36) et une seconde entrée/sortie (38) d'un signal TDM ;
- une seconde branche d'accès (26) possédant au moins une première entrée/sortie (52) d'un signal en mode ATM, un convertisseur (60) ATM/TDM et TDM/ATM et une seconde entrée/sortie (62) d'un signal TDM ; et
- un organe formant brasseur/multiplexeur (42) possédant une première entrée/sortie (40) reliée à la seconde entrée/sortie (38) de la première branche (24), une seconde entrée/sortie (44) reliée à la seconde entrée/sortie (62) de la seconde branche (26), et une troisième entrée/sortie (46) destinée à être reliée à un lien de transmission haut débit (74), ledit organe brasseur/multiplexeur (42) étant apte à allouer selon une loi d'allocation choisie un premier nombre p d'intervalles de temps au signal de téléphonie de la première branche d'accès (24) et un second nombre q d'intervalles de temps au signal en mode ATM de la seconde branche d'accès (26).

2. Equipement selon la revendication 1, **caractérisé en ce que** la loi d'allocation est dynamique.

3. Equipement selon la revendication 1, **caractérisé en ce que** la loi d'allocation est statique.

4. Equipement selon la revendication 1, **caractérisé en ce que** le rapport p/q est déterminé en fonction des besoins des usagers et/ou des configurations des opérateurs.

5. Equipement selon la revendication 1, **caractérisé en ce que** le lien haut débit (74) est au format G704 ou analogue.

6. Equipement selon la revendication 1, **caractérisé en ce que** le lien haut débit (74) est de l'ordre de 2 Mbit/s.

7. Equipement selon la revendication 1, **caractérisé en ce que** le lien haut débit (74) est inférieur à 2 Mbit/s.

8. Equipement selon la revendication 1, **caractérisé en ce que** le lien haut débit (74) est supérieur à 2 Mbit/s.

9. Equipement selon la revendication 1, **caractérisé en ce que** la première branche d'accès (24) comprend au moins un accès d'abonnés téléphoniques en mode circuit (32-Z) à 64 kbit/s.

10. Equipement selon la revendication 1, **caractérisé en ce que** la première branche d'accès (24) comprend au moins un accès d'abonnés téléphoniques (32-G) de type G703/G704.

11. Equipement selon la revendication 1, **caractérisé en ce que** la première branche (24) comprend une interface permettant l'accès à au moins un accès en mode circuit (32-S) de type RNIS.

12. Equipement selon l'une des revendications précédentes, **caractérisé en ce que** la seconde branche d'accès est destinée à être reliée à un réseau local haut débit de type LAN ou analogue via une interface ETHERNET (50) ou analogue.

13. Equipement selon la revendication 1, **caractérisé en ce que** la troisième entrée/sortie (46) de l'organe brasseur/multiplexeur (42) est reliée au réseau moyen et haut débit via une interface de trame (66) et une interface (72) de type SDSL.

14. Equipement selon l'une des revendications précédentes, **caractérisé en ce que** le lien de transmission (74) est de type paire torsadée, paire coaxiale, fibre optique, ou lien radiofréquence.
